# FASCICULE DE BREVET EUROPEEN

(11) **EP 2 643 174 B1**
(45) Date de publication et mention de la délivrance du brevet: **07.01.2015**
(21) Numéro de dépôt: 11805075.6
(22) Date de dépôt: 22.11.2011
(51) Int. Cl.: B60C 23/04, G06K 19/07, G07C 5/00

(54) **PROCEDE DE LECTURE DE DONNEES STOCKEES DANS UN DISPOSITIF ELECTRONIQUE POUR PNEUMATIQUE**
VERFAHREN ZUM AUSLESEN VON IN EINER ELEKTRONISCHEN VORRICHTUNG GESPEICHERTEN REIFENDATEN
METHOD FOR READING DATA STORED IN AN ELECTRONIC DEVICE FOR A TYRE

(30) Priorité: 24.11.2010 FR 1059689
(43) Date de publication de la demande: 02.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PENOT, Thierry, F-63040 Clermont-Ferrand Cedex 9 (FR)
(74) Mandataire: Dequire, Philippe Jean-Marie Denis
(86) Numéro de dépôt international: PCT/FR2011/052721
(87) Numéro de publication internationale: WO 2012/069753

(56) Documents cités:
- EP-A1- 2 202 099
- US-A- 6 087 930
- US-B2- 7 161 476
- Brian Green: "EPC SGTIN-96", , 24 juin 2009 (2009-06-24), XP002640821, Extrait de l'Internet: URL:http://www.bisg.org/docs/EPC_SGTIN_96. pdf [extrait le 2011-06-09]

## Description

La présente invention concerne le domaine technique des pneumatiques, en particulier des dispositifs électroniques destinés à être intégrés dans un pneumatique. L'invention s'applique à tout type de pneumatique, aux véhicules de tourisme et plus particulièrement aux pneumatiques pour véhicule industriel comme les camionnettes, les poids-lourd comme les métros, les bus, les engins de transport routier, par exemple les camions, les tracteurs, les remorques, et les véhicules hors la route tels que les engins agricoles ou de génie civil ou bien encore d'autres véhicules de transport ou de manutention.

On connaît déjà dans l'état de la technique un pneumatique portant différentes données inscrites sur des flancs du pneumatique, par exemple par moulage. Ces données comprennent notamment un identifiant du fabricant du pneumatique, des caractéristiques géométriques de pneumatique, par exemple une largeur de boudin, un indice de capacité de charge ou un code vitesse. Ces données comprennent également un numéro de série du pneumatique. Ce numéro de série comprend une suite de caractères alphanumériques constituée de chiffres et/ou nombres et de lettres.

Ces inscriptions, notamment le numéro de série, sont soumises aux agressions d'origine naturelle, par exemple le soleil ou la pluie. Elles sont également soumises à l'usure normale du pneumatique ou bien à une usure accélérée en raison, par exemple, de frottements répétés des flancs du pneumatique contre des trottoirs. Enfin, ces inscriptions peuvent être modifiées de façon frauduleuse par moulage d'une nouvelle couche de gomme sur les indications déjà existantes.

La disparition ou la modification des inscriptions, notamment du numéro de série, est problématique car il est alors impossible d'identifier le pneumatique, par exemple en vue d'un suivi régulier de ce dernier. Ce problème se pose notamment dans les cas où il est nécessaire de gérer de nombreux pneumatiques, par exemple dans le cas de flottes de véhicules.

US7161476 décrit un procédé de lecture de données selon le préambule de la revendication 1.

L'invention a pour but de permettre une identification fiable du pneumatique.

A cet effet, l'invention a pour objet un procédé de lecture de données tel que défini dans la revendication 1.

En stockant les données dans le dispositif électronique intégré au pneumatique, celles-ci sont préservées des agressions d'origine naturelle, de l'usure du pneumatique ou bien d'une modification frauduleuse. En effet, le dispositif est protégé par la gomme du pneumatique dans laquelle il est généralement noyé.

En outre, lors de la fabrication du pneumatique, il n'est plus nécessaire de prévoir d'étape de moulage des données sur les flancs du pneumatique. Le procédé de fabrication du pneumatique est donc simplifié.

Selon l'invention, l'intervalle réservé au numéro de série comprend au moins un intervalle d'un premier type comprenant un premier nombre de bits, cet intervalle codant pour un premier nombre décimal et au moins un intervalle d'un deuxième type comprenant un deuxième nombre de bits, cet intervalle codant pour un deuxième nombre décimal. Chaque intervalle de bits est défini par au moins une des caractéristiques suivantes: un bit de départ, un nombre de bits dans l'intervalle, un bit de fin.

Egalement selon l'invention, On décode les données de chaque intervalle du premier type sous forme d'un premier nombre décimal et on associe chaque premier nombre décimal à une lettre. Ainsi, on peut facilement décoder un numéro de série d'un pneumatique comprenant une lettre et un nombre.

Selon des caractéristiques optionnelles du procédé :
- La zone de stockage de données comprenant l'intervalle réservé à un numéro de série du pneumatique est normalisée. De préférence, la zone normalisée est conforme à un format particulier SGTIN 96 (Serial Global Trade Item Number tel que décrit dans le document EPC Tag Data Standard version 1.5 de la société GS1). Ainsi, les 8 premiers bits sont réservés a une en-tête de protocole (« Header »), les 3 bits suivants sont réservés à une valeur de filtre (« Filter »), les 3 bits suivants sont réservés à une valeur de partition (« Partition »), les 20 bits suivants sont réservés à un identifiant du fabricant du pneumatique (« Company Identification »), les 24 bits suivants sont réservés à une référence d'objet (« Item Reference ») et les 38 derniers bits sont réservés à un numéro de série du pneumatique (« Serial Number »).
- On décode au moins une partie des données lues sous forme d'un nombre décimal et on associe ce nombre décimal à la au moins une lettre. Le nombre décodé à partir des bits permet, par exemple grâce à un tableau de correspondance, de déterminer quelle lettre correspond à la partie des données lues. Des étapes de décodage plus complexes peuvent évidemment être utilisées. On notera que l'on entend par nombre décimal un nombre entier correspondant à la juxtaposition d'un ou plusieurs chiffres, un chiffre étant un nombre entier compris entre 0 et 9. Par ailleurs, on entend par « associer un nombre décimal à une lettre » le fait qu'un nombre décimal correspond à au plus une lettre.

Avantageusement, on décode les données lues dans l'intervalle réservé au numéro de série en fonction d'au moins un paramètre choisi parmi :
- le nombre d'intervalles des premier et deuxième types dans l'intervalle réservé;
- la répartition des intervalles des premier et deuxième types dans l'intervalle réservé;
- les premier et deuxième nombre de bits.

De façon optionnelle, la zone normalisée de stockage comprend au moins un intervalle de bits réservé à au moins un élément choisi parmi une en-tête de protocole, une valeur de filtre, une valeur de partition, un identifiant du fabricant du pneumatique et une référence d'objet.

Selon une autre caractéristique optionnelle du procédé, les moyens de stockage comprennent également une zone non normalisée de stockage de données.

La zone non normalisée n'est conforme à aucun format particulier. Elle est généralement utilisée par les constructeurs automobiles pour stocker des informations autres que celles relatives directement au pneumatique. Il est donc important que le constructeur automobile puisse disposer de tout l'espace de cette zone non normalisée pour y stocker le maximum de données.

L'invention a encore pour objet un procédé d'écriture de données tel que défini dans la revendication 6.

Selon l'invention, l'intervalle réservé au numéro de série comprend au moins un intervalle d'un premier type comprenant un premier nombre de bits, cet intervalle codant pour un premier nombre décimal et au moins un intervalle d'un deuxième type comprenant un deuxième nombre de bits, cet intervalle codant pour un deuxième nombre décimal. Chaque intervalle de bits est défini par au moins une des caractéristiques suivantes: un bit de départ, un nombre de bits dans l'intervalle, un bit de fin.

Egalement selon l'invention, on associe chaque lettre à un premier nombre décimal et on code chaque premier nombre décimal sous forme de bits. Ainsi, on peut facilement coder un numéro de série d'un pneumatique comprenant une lettre et un nombre.

Selon des caractéristiques optionnelles du procédé :
- La zone de stockage de données comprenant l'intervalle réservé à un numéro de série du pneumatique est normalisée. De préférence, la zone normalisée est conforme à un format particulier SGTIN 96 (Serial Global Trade Item Number tel que décrit dans le document EPC Tag Data Standard version 1.5 de la société GS1).

L'invention a pour autre objet un programme d'ordinateur, caractérisé en ce qu'il comprend des instructions de code pour commander l'exécution des étapes d'un procédé de lecture ou d'un procédé d'écriture tels que défini ci-dessus lorsqu'il est exécuté sur un ordinateur.

L'invention a encore pour objet une unité de lecture de données stockées sous forme de bits dans un dispositif électronique intégré dans un pneumatique pour la mise en oeuvre d'un procédé tel que défini ci-dessus, comprenant des moyens de lecture de données stockées dans le dispositif électronique et des moyens de décodage, sous forme d'au moins une lettre, des bits lus.

L'invention sera mieux comprise à la lecture de la description qui va suivre, donnée uniquement à titre d'exemple non limitatif et faite en se référant aux dessins dans lesquels :
- la figure 1 illustre un dispositif électronique d'un pneumatique;
- la figure 2 est une représentation schématique de moyens de stockage de données du dispositif de la figure 1.

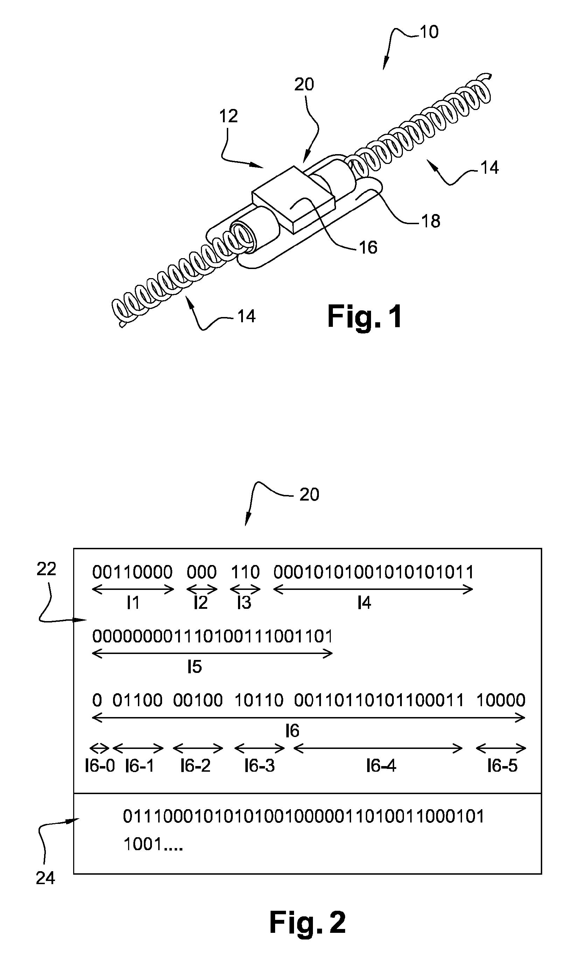

On a représenté sur la figure 1 un dispositif électronique selon un premier mode de réalisation désigné par la référence générale 10.

Le dispositif 10 comprend un organe électronique 12 ainsi que deux antennes 14 formant dipôle. L'organe électronique 12 comprend une puce 16 de type RFID fixée sur un support 18. Chaque antenne 14 présente une forme hélicoïdale.

L'organe électronique 12 comprend des moyens 20 de stockage de données, illustrés de façon schématique sur la figure 2. Les moyens 20 comprennent une zone normalisée 22 de stockage de données, ici d'un numéro d'identification normalisé, et une zone non normalisée 24 de stockage de données. Les données de la zone normalisée 22 sont stockées sur 96 bits. La zone normalisée 22 est une zone appelée U2 et la zone non normalisée 24 est une zone appelée « User Memory » (zone mémoire de l'utilisateur).

La zone normalisée 22 comprend des intervalles réservés I1-16 de données stockées sous forme de bits. Chaque intervalle I1-16 est respectivement réservé à une en-tête de protocole appelée « Header», une valeur de filtre appelée « Filter», une valeur de partition appelée « Partition », un identifiant du fabricant du pneumatique appelé « Company Identification », une référence d'objet appelée « Item Reference » et un numéro de série appelé « Serial Number». Chaque intervalle I1-16 comprend respectivement 8 bits, 3 bits, 3 bits, 20 bits, 24 bits et 38 bits.

L'intervalle I6 réservé au numéro de série comprend un intervalle I6-0 constitué, par défaut, d'un bit égal à 0. L'intervalle I6 réservé au numéro de série comprend dans cet exemple S1=4 intervalles I6-1, I6-2, I6-3, I6-5 d'un premier type comprenant chacun un premier nombre N1 de bits, chaque intervalle I6-1, I6-2, I6-3, I6-5 codant pour un nombre compris entre 0 et 31. Ici, N1=5. Les intervalles I6-1, I6-2, I6-3, I6-5 comprennent donc 20 bits au total. L'intervalle I6 réservé au numéro de série comprend également S2=1 intervalle I6-4 d'un deuxième type comprenant un deuxième nombre N2 de bits, l'intervalle I6-4 codant pour un nombre compris entre 0 et 131071. Ici, N2=17. L'intervalle I6-4 comprend donc 17 bits au total.

La zone non normalisée 24 comprend également des intervalles de données stockées sous forme de bits.

En l'espèce, la zone normalisée 22 comprend les bits 001100000001100001010100101010101100000000111010011100110101100001001 01100011011010110001110000 codant pour les données 4806086699059853 LDV28003P, LDV28003P correspondant au numéro de série du pneumatique.

On va maintenant décrire un procédé de lecture des données stockées dans le dispositif 10.

Le dispositif 10 est noyé dans la gomme d'un pneumatique, par exemple dans la masse de gomme formant un flanc du pneumatique. On utilise une unité de lecture de données comprenant des moyens de lecture de données stockées dans le dispositif électronique 12. L'unité de lecture de données comprend également des moyens de décodage des bits lus dans les moyens de stockage 20 du dispositif 12. Les moyens de décodage comprennent ainsi un module de décodage de bits en format décimal et un module de décodage de nombres et/ou chiffres décimaux en au moins une lettre.

Au moyen de l'unité de lecture, on lit les données stockées dans la zone normalisée 22.

On lit les données stockées dans chaque intervalle réservé I1-I5. On décode les données lues dans chaque intervalle 11, I2, 13, 14 et 15, respectivement 00110000, 000, 110, 00010101001010101011 et 000000001110100111001101 sous forme d'un nombre décimal respectivement 48, 0, 6, 086699 et 059853.

On lit également les données stockées dans l'intervalle 16 réservé au numéro de série. On décode au moins une partie des données lues dans l'intervalle 16 sous forme d'au moins une lettre de façon à déterminer le numéro de série du pneumatique. En l'espèce, dans un premier temps, on décode les données lues sous forme de nombres décimaux en fonction des paramètres suivants:
- les nombres S1, S2 d'intervalles des premier et deuxième types dans l'intervalle réservé I6;
- la répartition des intervalles I6-1, I6-2, I6-3, I6-4 et I6-5 des premier et deuxième types dans l'intervalle réservé I6;
- les nombres N1, N2 de bits des premier et deuxième types dans l'intervalle réservé I6.

En l'espèce, on sait que S1=4 et S2=1. En outre, on sait que les intervalles sont répartis dans l'ordre suivant: I6-1 - I6-2 - I6-3 - I6-4 - I6-5 avec I6-1, I6-2, I6-3 et I6-5 étant des intervalles du premier type et I6-4 étant un intervalle du deuxième type. De plus, on sait que N1=5 et N2=17. Enfin, on sait que le premier bit de l'intervalle I6-0 est, par défaut, égal à 0.

On décode donc les données lues dans chaque intervalle I6-1, I6-2, I6-3, I6-4 et I6-5, respectivement ici 01100, 00100, 10110, 00110110101100011 et 10000 sous forme d'un nombre décimal, respectivement ici 12, 4, 22, 28003 et 16. On associe alors chaque nombre décimal lu dans les intervalles du premier type à une lettre au moyen d'une table de correspondance. Ici, on utilise le tableau 1 ci-dessous.

**Tableau 1: correspondance entre les nombres et les lettres de l'intervalle réservé au numéro de série.**

| Nombre | Lettre | Nombre | Lettre | Nombre | Lettre | Nombre | Lettre | Nombre | Lettre | Nombre | Lettre |
|---|---|---|---|---|---|---|---|---|---|---|---|
| 1 | A | 5 | E | 9 | I | 13 | M | 17 | Q | 21 | U |
| 2 | B | 6 | F | 10 | J | 14 | N | 18 | R | 22 | V |
| 3 | C | 7 | G | 11 | K | 15 | O | 19 | S | 23 | W |
| 4 | D | 8 | H | 12 | L | 16 | P | 20 | T | 24 | X |

Ainsi, les données stockées dans chaque intervalle I6-1, I6-2, I6-3 et I6-5 codent respectivement pour la lettre L, D, V et P. On détermine ainsi le numéro de série du pneumatique LDV28003P.

On va maintenant décrire un procédé d'écriture des données dans les moyens de stockage 20. On souhaite écrire les données 48 0 6 086699 059853 LDV28003P dans la zone normalisée 22, les données 48, 0, 6, 086699, 059853 et LDV28003P correspondant respectivement à l'en-tête de protocole, à la valeur de filtre, à la valeur de partition, à l'identifiant du fabricant du pneumatique, à la référence d'objet et au numéro de série.

De façon inverse au procédé de lecture précédemment décrit, on code les données, en particulier le numéro de série, en bits. Ainsi, les nombres décimaux et les lettres ci-dessus sont codés, notamment à partir du tableau 1 afin d'obtenir les bits suivants: 00110000 000 110 00010101001010101011000000001110100111001101 0110000100101100011011010110001110000.

Tout ou partie du procédé selon l'invention pourra être mise en oeuvre par le biais d'instructions de code pour commander l'exécution des étapes du procédé lorsqu'il est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication, de préférence sans fil tel que le réseau Internet ou un réseau Intranet. Des mises à jour du programme pourront ainsi être envoyées par ce réseau aux ordinateurs connectés au réseau.

L'invention ne se limite pas aux modes de réalisation précédemment décrits.

L'organe électronique pourra être du type passif, c'est-à-dire apte à communiquer des données comprises dans la puce électronique à l'unité de lecture ou du type actif, c'est-à-dire apte à recevoir des données émises par un capteur afin de les communiquer à l'unité de lecture. Un tel organe actif peut comprendre notamment un microprocesseur ainsi qu'une mémoire.

D'autres tableaux de correspondance entre nombre et lettre pourront être utilisés.

## Revendications

1. Procédé de lecture de données dans lequel les données sont stockées dans un dispositif électronique (10) intégré dans un pneumatique, le dispositif (10) comprenant des moyens (20) de stockage de données, les moyens de stockage (20) comprenant une zone (22) de stockage de données comprenant un intervalle (I6) réservé à un numéro de série du pneumatique stocké sous forme de bits, procédé dans lequel :
- on lit les données stockées dans l'intervalle (I6) réservé au numéro de série du pneumatique; et
- on décode au moins une partie des données lues sous forme d'au moins une lettre de façon à déterminer le numéro de série du pneumatique, ledit procédé étant **caractérisé en ce que** l'intervalle (I6) réservé au numéro de série comprenant au moins un intervalle (I6-1, I6-2, I6-3, I6-5) d'un premier type comprenant un premier nombre de bits, cet intervalle codant pour un premier nombre décimal et au moins un intervalle (I6-4) d'un deuxième type comprenant un deuxième nombre de bits, cet intervalle codant pour un deuxième nombre décimal,
- on décode les données de chaque intervalle du premier type sous forme d'un premier nombre décimal et on associe chaque premier nombre décimal à une lettre.

2. Procédé selon la revendication 1, dans lequel la zone (22) de stockage de données comprenant l'intervalle (I6) est normalisée.

3. Procédé selon l'une quelconque des revendications précédentes, dans lequel on décode les données lues dans l'intervalle (I6) réservé au numéro de série en fonction d'au moins un paramètre choisi parmi :
- le nombre d'intervalles des premier et deuxième types dans l'intervalle réservé;
- la répartition des intervalles des premier et deuxième types dans l'intervalle réservé;
- les premier et deuxième nombre de bits.

4. Procédé selon l'une quelconque des revendications précédentes, dans lequel la zone normalisée (22) de stockage comprend au moins un intervalle (I1, I2, I3, I4, I5) de bits réservé à au moins un élément choisi parmi une en-tête de protocole, une valeur de filtre, une valeur de partition, un identifiant du fabricant du pneumatique et une référence d'objet.

5. Procédé selon l'une quelconque des revendications précédentes, dans lequel les moyens de stockage (20) comprennent également une zone non normalisée (24) de stockage de données.

6. Procédé d'écriture de données dans lequel les données sont stockées dans un dispositif électronique (10) intégré dans un pneumatique, le dispositif (10) comprenant des moyens (20) de stockage de données, les moyens (20) de stockage comprenant une zone (22) de stockage de données comprenant un intervalle (I6) réservé à un numéro de série du pneumatique stocké sous forme de bits, procédé dans lequel :
- le numéro de série du pneumatique comprenant au moins une lettre, on code le numéro de série en bits; et
- on écrit le numéro de série codé dans l'intervalle réservé (I6), ledit procédé étant **caractérisé en ce que** l'intervalle (I6) réservé au numéro de série comprenant au moins un intervalle (I6-1, I6-2, I6-3, I6-5) d'un premier type comprenant un premier nombre de bits, cet intervalle codant pour un premier nombre décimal et au moins un intervalle (I6-4) d'un deuxième type comprenant un deuxième nombre de bits, cet intervalle codant pour un deuxième nombre décimal,
- on associe chaque lettre à un premier nombre décimal et on code chaque premier nombre décimal sous forme de bits..

7. Procédé selon la revendication 6, dans lequel la zone (22) de stockage de données comprenant l'intervalle (I6) est normalisée.

8. Programme d'ordinateur, **caractérisé en ce qu**'il comprend des instructions de code pour commander l'exécution des étapes d'un procédé de lecture selon l'une quelconque des revendications 1 à 5 ou d'un procédé d'écriture selon l'une quelconque des revendications 6 et 7 lorsqu'il est exécuté sur un ordinateur.

9. Unité de lecture de données stockées sous forme de bits dans un dispositif électronique (12) intégré dans un pneumatique pour la mise en oeuvre d'un procédé selon l'une quelconque des revendications 1 à 7, **caractérisé en ce qu**'il comprend des moyens de lecture de données stockées dans le dispositif électronique et des moyens de décodage, sous forme d'au moins une lettre, des bits lus.

## Patentansprüche

1. Verfahren zum Lesen von Daten, wobei die Daten in einer in einen Luftreifen integrierten elektronischen Vorrichtung (10) gespeichert sind, wobei die Vorrichtung (10) Einrichtungen (20) zur Datenspeicherung enthält, wobei die Speichereinrichtungen (20) eine Datenspeicherzone (22) enthalten, die einen für eine in Form von Bits gespeicherte Seriennummer des Luftreifens reservierten Bereich (16) enthält, Verfahren, bei dem:
- die im für die Seriennummer des Luftreifens reservierten Bereich (16) gespeicherten Daten gelesen werden; und
- mindestens ein Teil der gelesenen Daten in Form mindestens eines Buchstaben decodiert wird, um die Seriennummer des Luftreifens zu bestimmen,
wobei das Verfahren **dadurch gekennzeichnet ist, dass** der für die Seriennummer reservierte Bereich (16) mindestens einen Bereich (16-1, 16-2, 16-3, 16-5) eines ersten Typs, der eine erste Anzahl von Bits enthält, wobei dieser Bereich für eine erste Dezimalzahl codiert, und mindestens einen Bereich (16-4) eines zweiten Typs enthält, der eine zweite Anzahl von Bits enthält, wobei dieser Bereich für eine zweite Dezimalzahl codiert,
- die Daten jedes Bereichs des ersten Typs in Form einer ersten Dezimalzahl decodiert werden, und jede erste Dezimalzahl einem Buchstaben zugeordnet wird.

2. Verfahren nach Anspruch 1, wobei die den Bereich (16) enthaltende Datenspeicherzone (22) normiert ist.

3. Verfahren nach einem der vorhergehenden Ansprüche, wobei die im für die Seriennummer reservierten Bereich (16) gelesenen Daten abhängig von mindestens einem Parameter decodiert werden, der ausgewählt wird unter:
- der Anzahl von Bereichen des ersten und zweiten Typs im reservierten Bereich;
- der Verteilung der Bereiche des ersten und zweiten Typs im reservierten Bereich;
- der ersten und zweiten Anzahl von Bits.

4. Verfahren nach einem der vorhergehenden Ansprüche, wobei die normierte Speicherzone (22) mindestens einen Bereich (I1, 12, 13, 14, 15) von Bits enthält, der für mindestens ein Element reserviert ist, das ausgewählt wird unter einer Protokoll-Kopfzeile, einem Filterwert, einem Partitionswert, einer Kennung des Herstellers des Luftreifens und einer Objektreferenz.

5. Verfahren nach einem der vorhergehenden Ansprüche, wobei die Speichereinrichtungen (20) ebenfalls eine nicht normierte Datenspeicherzone (24) enthalten.

6. Dateneingabeverfahren, wobei die Daten in einer in einen Luftreifen integrierten elektronischen Vorrichtung (10) gespeichert werden, wobei die Vorrichtung (10) Datenspeichereinrichtungen (20) enthält, wobei die Speichereinrichtungen (20) eine Datenspeicherzone (22) enthalten, die einen für eine in Form von Bits gespeicherte Seriennummer des Luftreifens reservierten Bereich (16) enthält, Verfahren, bei dem:
- da die Seriennummer des Luftreifens mindestens einen Buchstaben enthält, die Seriennummer in Bits codiert wird; und
- die codierte Seriennummer in den reservierten Bereich (16) eingegeben wird,
wobei das Verfahren **dadurch gekennzeichnet ist, dass** der für die Seriennummer reservierte Bereich (16) mindestens einen Bereich (16-1, 16-2, 16-3, 16-5) eines ersten Typs, der eine erste Anzahl von Bits enthält, wobei dieser Bereich für eine erste Dezimalzahl codiert, und mindestens einen Bereich (16-4) eines zweiten Typs enthält, der eine zweite Anzahl von Bits enthält, wobei dieser Bereich für eine zweite Dezimalzahl codiert,
- jeder Buchstabe einer ersten Dezimalzahl zugeordnet und jede erste Dezimalzahl in Bitform codiert wird.

7. Verfahren nach Anspruch 6, wobei die den Bereich (16) enthaltende Datenspeicherzone (22) normiert ist.

8. Computerprogramm, **dadurch gekennzeichnet, dass** es Codeanweisungen enthält, um die Ausführung der Schritte eines Leseverfahrens nach einem der Ansprüche 1 bis 5 oder eines Schreibverfahrens nach einem der Ansprüche 6 und 7 auszuführen, wenn es in einem Computer ausgeführt wird.

9. Einheit zum Lesen von in Bitform in einer in einen Luftreifen integrierten elektronischen Vorrichtung (12) gespeicherten Daten zur Durchführung eines Verfahrens nach einem der Ansprüche 1 bis 7, **dadurch gekennzeichnet, dass** sie Einrichtungen zum Lesen von in der elektronischen Vorrichtung gespeicherten Daten und Einrichtungen zum Decodieren, in Form mindestens eines Buchstabens, der gelesenen Bits enthält.

## Claims

1. Method for reading data, in which the data are stored in an electronic device (10) integrated into a tyre, the device (10) comprising data storage means (20), the storage means (20) comprising a data storage zone (22) including a field (I6) reserved for a serial number of the tyre, stored in bit form, in which method:
- the data stored in the field (I6) reserved for the tyre serial number are read, and
- at least a part of the read data is decoded into the form of at least one letter so as to determine the serial number of the tyre, said method being **characterized in that** the field (I6) reserved for the serial number comprising at least one field (I6-1, I6-2, I6-3, I6-5) of a first type comprising a first number of bits, coding for a first decimal number, and at least one field (I6-4) of a second type comprising a second number of bits, coding for a second decimal number,
- the data in each field of the first type are decoded into the form of a first decimal number, and each first decimal number is associated with a letter...

2. Method according to Claim 1, in which the data storage zone (22) comprising the field (I6) is standardized.

3. Method according to any of the preceding claims, in which the data read from the field (I6) reserved for the serial number are decoded as a function of at least one parameter chosen from among:
- the number of fields of the first and second types in the reserved field;
- the distribution of the fields of the first and second types in the reserved field;
- the first and second number of bits.

4. Method according to any of the preceding claims, in which the standardized storage zone (22) comprises at least one bit field (I1, I2, I3, I4, I5) reserved for at least one element chosen from among a protocol header, a filter value, a partition value, an identifier of the tyre manufacturer, and an item reference.

5. Method according to any of the preceding claims, in which the storage means (20) also comprise a non-standardized data storage zone (24).

6. Method for writing data, in which the data are stored in an electronic device (10) integrated into a tyre, the device (10) comprising data storage means (20), the storage means (20) comprising a data storage zone (22) including a field (I6) reserved for a serial number of the tyre, stored in bit form, in which method:
- the serial number of the tyre comprises at least one letter, and the serial number is encoded in bits; and
- the encoded serial number is written in the reserved field (I6), said method bing **characterized in that** the field (I6) reserved for the serial number comprising at least one field (I6-1, I6-2, I6-3, I6-5) of a first type comprising a first number of bits, this field coding for a first decimal number, and at least one field (I6-4) of a second type comprising a second number of bits, this field coding for a second decimal number,
- each letter is associated with a first decimal number, and each first decimal number is encoded in bit form.

7. Method according to Claim 6, in which the data storage zone (22) comprising the field (I6) is standardized.

8. Computer program, **characterized in that** it comprises instructions in code for causing the steps of a reading method according to any of Claims 1 to 5, or of a writing method according to any of Claims 6 and 7, to be executed when the program is run on a computer.

9. Unit for reading data stored in bit form in an electronic device (12) integrated into a tyre for the application of a method according to any of Claims 1 to 7, **characterized in that** it comprises means for reading data stored in the electronic device and means for decoding the read bits into the form of at least one letter.
